(19) Europäisches Patentamt
European Patent Office
Office européen des brevets

(11) Publication number: **0 160 537 B1**

(12) **EUROPEAN PATENT SPECIFICATION**

(45) Date of publication of patent specification: **20.06.90**

(51) Int. Cl.$^5$: **B 29 C 33/64** // C10M107/50, C10N40:00

(21) Application number: **85302959.3**

(22) Date of filing: **26.04.85**

(54) **Method for lubricating tire-molding bladders.**

(30) Priority: **27.04.84 JP 87119/84**

(43) Date of publication of application: **06.11.85 Bulletin 85/45**

(45) Publication of the grant of the patent: **20.06.90 Bulletin 90/25**

(84) Designated Contracting States: **BE DE FR GB IT**

(56) References cited:
**GB-A-2 087 913**
**GB-A-2 088 898**
**US-A-3 905 823**

(73) Proprietor: **Toray Silicone Company Limited**
**Mitsui Building No. 6 2-8 Nihonbashi-Muromachi**
**Chuo-ku Tokyo 103 (JP)**

(72) Inventor: **Ona, Isao**
**2848-46 Kubota Sodegaura-Machi**
**Kimitsu-gun Chiba-ken (JP)**
Inventor: **Usui, Katsutoshi**
**5-12-17 Aobadai**
**Ichiharashi Chiba-ken (JP)**

(74) Representative: **Laredo, Jack Joseph et al**
**Elkington and Fife Beacon House 113 Kingsway**
**London, WC2B 6PP (GB)**

**EP 0 160 537 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention concerns a lubricant composition for tire-molding bladders. In the vulcanization molding of unvulcanized crude tires, a bag, a so-called "bladder", is usually inserted into the tire and expanded with hot water or steam followed by molding in the metal mold. When the bladder expands, good lubrication must be present between the interior of the crude tire and the bladder. Moreover, after vulcanization, there must be good release between the bladder and the interior surface of the vulcanized tire. Accordingly, a mixture of silicone release oil, mica powder and talc powder usually referred to as inner surface release, inner surface paint, green inner paint or BPL), dissolved and dispersed in rubber volatile oil, etc., is sprayed and dried on the inner surface of each crude tire and the bladder is then inserted and the tire is then vulcanised and molded. U.S. Patent 3,905,823 discloses a mold release composition comprising an aminofunctional silicon fluid, an organopolysiloxane fluid, a polyglycol, a thickening agent for nonpolar solvents, a hydrocarbon solvent and mica. However, the mica powder and talc powder tend to fall off the surface of the crude tire, becoming attached to the outer surface of the tire and producing a soilage or stain. As a result, the inner surface of each tire must be dried after spraying, which complicates the process and reduces the productivity. For this reason, methods and compositions have been proposed in which a release agent or lubricant is applied to the bladder's surface instead of the previous application of inner surface paint to the inner surface of the crude tire.

Japanese Kokai Patent 57-111394 (Great Britain 2087914) discloses a mixture of polydimethylsiloxane, alkoxysilane and zinc catalyst; however, the working time (pot life) is short as a result. Adhesion to the bladder is also weak and not long lasting. Japanese Kokai Patent 57-119992 (Great Britain 2088898) and Japanese Kokai Patent 57-111393 (Great Britain 2087913) discloses polyethylene glycol- and/or polypropylene glycol-containing compositions which, accordingly, have an inferior heat resistance. Due to their thermal decomposition, the polydimethylsiloxane and bentonite clay on the bladder's surface readily come off, resulting in poor durability.

Brief description of the invention

The above noted drawbacks of the prior art are resolved by the improvement offered by the present invention which, briefly stated, comprises applying to the tire-contacting surface of a tire-molding bladder a lubrication/release composition comprising a curable organopolysiloxane, in aqueous emulsion, and then curing the applied organopolysiloxane by way of one or more silicon-bonded, amino-substituted hydrocarbon radicals. Curing of the organopolysiloxane is preferably accelerated by heating the applied composition.

It is also an object of this invention to provide an improved process for molding tires with the aid of a tire-molding bladder wherein the bladder can be used repeatedly without the necessity of recoating the bladder.

Detailed description of the invention

Specifically, the present invention relates to an improved process for molding a tire, said process comprising applying a lubricant/release composition to at least the tire-contacting surface of a tire-molding bladder to improve the lubrication between the bladder and a tire being molded therewith and/or to improve the release of the bladder from a tire molded therewith, the improvement comprising (i) applying, as said lubricant/release composition, a lubricant/release composition consisting essentially of an aqueous emulsion of an organopolysiloxane component containing an average of at least one silicon-bonded, amino-substituted hydrocarbon radical per molecule thereof having the formula

$$-R^1(NHCH_2CH_2)_aNHR^2$$

wherein $R^1$ denotes a divalent hydrocarbon radical, $R^2$ denotes a radical selected from hydrogen and monovalent hydrocarbon radicals and *a* denotes a number having a value of from 0 to 10 and, optionally, at least one surfactant selected from nonionic and cationic surfactants; and (ii) thereafter curing the applied composition.

By way of further explanation, the organopolysiloxane containing at least one radical with the formula

$$-R^1(NHCH_2CH_2)_aNHR^2$$

bonded to silicon in each molecule is the principal material of the present composition and imparts durable release and lubricity. It undergoes self-crosslinking into a rubber by atmospheric carbon dioxide after evaporation of the water component and then strongly adheres to the bladder's surface. In the formula $R^1$ is a divalent hydrocarbon radical and examples thereof are alkylene radicals having the formula $-C_nH_{2n}-$, such as $-CH_2-$, $-CH_2CH_2-$, $-CH_2CH_2CH_2-$, $-CH_2CH(CH_3)CH_2-$ and $-(CH_2)_4-$ and alkylene arylene radicals such as $-(CH_2)_2C_6H_4-$. Among these, the propylene radical is the most common. $R^2$ is a hydrogen atom or a monovalent hydrocarbon group. Examples of the latter are methyl, ethyl, propyl, hexyl and phenyl; *a* is a number with the value of 0 to 10, preferably 0 or 1. The other silicon-bonded radicals in the

organopolysiloxane can be alkyl radicals such as methyl, ethyl, propyl, butyl and pentyl; substituted alkyl radicals such as 2-phenylethyl, 2-phenylpropyl and 3,3,3-trifluoropropyl; aryl and substituted aryl radicals as phenyl, tolyl and xylyl; alkenyl radicals such as vinyl, allyl and propenyl; alkoxy radicals such as methoxy, ethoxy, propoxy and methoxyethoxy; and hydroxyl group.

The organopolysiloxane component must contain at least one siloxane unit possessing the group with the formula

$$—R^1(NHCH_2CH_2)_aNHR^2$$

bonded to silicon. It is possibly constituted only of such a siloxane unit or may also contain other organosiloxane units. In such other organosiloxane units, the silicon-bonded radicals can be an alkyl radical such as methyl, ethyl, propyl, butyl and pentyl; substituted alkyl radicals such as 2-phenylethyl, 2-phenylpropyl and 3,3,3-trifluoropropyl; aryl or substituted aryl radicals such as phenyl, tolyl and xylyl; alkenyl radicals such as vinyl, allyl and propenyl; alkoxy radicals such as methoxy, ethoxy, propoxy and methoxyethoxy, or the hydroxyl radicals.

From the standpoint of releasability, the silicon-bonded radicals preferably are at least 20 mol % alkyl radicals. The molecular structure of this organopolysiloxane may be either straight chain, branched, cyclic or network. The organopolysiloxane component preferably has a straight chain molecular structure having the formula

$$AMe_2SiO(\underset{\substack{|\\ R^1(NHCH_2CH_2)_aNHR^2}}{MeSiO})_x(Me_2SiO)_ySiMe_2A$$

wherein $R^1$, $R^2$ and *a* are as noted above and A denotes a chain terminating radical selected from hydroxy; monovalent hydrocarbon, such as methyl, vinyl or phenyl; alkoxy, such as methoxy or ethoxy; and

$$—R^1(NHCH_2CH_2)_aNHR^2,$$

such as

$$—C_nH_{2n}(NHCH_2CH_2)_aNH_2$$

where *n* is three or four and *a* is zero or one; and *x* and *y* denote numbers having a value of zero or more. From the standpoint of ease of emulsification the viscosity is preferably $10^{-5}$ to $10^{-2}$ $m^2/s$ (10 to 10,000 centistokes (cS)) at 25°C.

A nonionic or cationic surfactant is desirably present for emulsifying the organopolysiloxane component. Examples of the nonionic surfactants are polyoxyalkylene alkyl ethers, polyoxyalkylene alkylphenol ethers, polyoxyalkylene alkyl esters, sorbitan alkyl esters, polyoxyalkylene sorbitan alkyl esters, etc. Examples of the cationic surfactants are aliphatic amine salts, quaternary ammonium salts, alkylpyridinium salts, etc. One or more than one of these species can be used. The surfactant is added in the amount necessary for the emulsification of the organopolysiloxane component. Usually, 1 to 50 weight parts are used per 100 weight parts of organopolysiloxane.

Water is used to produce the emulsion of the present composition. There is no specific requirement on its quantity.

To produce the lubricant/release composition, the surfactant component and the water component are added to the organopolysiloxane component and this is then emulsified using an emulsifying device such as a colloid mill, homogenizer, homomixer, etc. Colortants, preservatives, trimethylsilyl-terminated dimethylpolysiloxane oil or protective colloids such as poly(vinyl alcohol), methylcellulose, etc., to improve the emulsion's storage stability and dilution stability may be added to the composition, if desired.

The lubricant composition for tire-molding bladders is then uniformly sprayed onto the surface of the bladder and dried. Upon heating at 130 to 200°C for 30 to 10 minutes, the organopolysiloxane component in the composition undergoes self-crosslinking together with atmospheric carbon dioxide gas. A rubber film with a durable lubrication and releasability is thus obtained.

If the lubrication or releasability deteriorates during tire-molding operations, the composition of the present invention can be applied to the same bladder again in order to use the bladder repeatedly.

The improved process of this invention will now be further explained by the disclosure of example which illustrate, but do not limit, the invention. All parts and percentages are by weight unless otherwise indicated. Viscosities were measured at 25°C. Me denotes the methyl radical.

Example 1

Octamethylcyclotetrasiloxane, 94.16 parts; $CH_3(CH_3O)_2Si(CH_2)_3NHCH_2CH_2NH_2$, 5.33 parts; hexamethyldisiloxane, 0.51 part as the end-blocking agent and 0.02 part potassium hydroxide as the catalyst are mixed and an equilibriation reaction is carried out at 130°C for 10 hours to yield an amino group-containing organopolysiloxane ($1.45\times10^{-3}$ $m^2/s$ (1,450 cS) viscosity) with the formula.

$$Me_3SiO(Me_2SiO)_{400}(\underset{\substack{|\\ (CH_2)_3NHCH_2CH_2NH_2}}{MeSiO})_3SiMe_3$$

A uniform emulsion starting solution is prepared from 30 parts of this organopolysiloxane, 3 species of polyoxyethylene nonylphenol ethers with different HLB values as the surfactant and 67 parts water.

The surface of a butyl rubber bladder is completely cleaned with a toluene-containing cloth to remove all the oil stains, etc., and then uniformly sprayed with the usual spray gun with the emulsion starting solution diluted 3-fold with water. After drying, this is heated at 170°C for 30 minutes. The composition of the invention becomes a rubber which is tightly adhered to the bladder's surface. The bladder is inserted into a BAG-O-MATIC vulcanizer for the repeated vulcanization molding of crude tires into radial tires for passenger cars. Good molding without inner paint (BPL or green inner paint) is continued up to the 14th cycle. Due to the decline in releasability, the emulsion starting solution diluted 3-fold with water is sprayed again and molding may again be repeated 14 times.

For comparison, a 30% emulsion (solution (a)) of a trimethylsilyl-terminated dimethylpolysiloxane (viscosity $3.5\times10^{-4}$ $m^2/s$ (350 cS)) is used in the same molding experiment. Only 3 tires could be molded.

Example 2

An amino group-containing organopolysiloxane with a $3.5\times10^{-3}$ $m^2/s$ (3,500 cS) viscosity is prepared by reacting a mixture of 100 parts hydroxyl-terminated dimethylpolysiloxane with a viscosity of $8\times10^{-5}$ $m^2/s$ (80 cS),

$$1.2 \text{ parts } CH_3(CH_3O)_2Si(CH_2)_3NHCH_2CH_2NH_2,$$

$$0.3 \text{ parts } (CH_3O)_3Si(CH_2)_3NHCH_2CH_2NH_2$$

and 0.08 part potassium hydroxide at 130°C for 3 hours.

Using this amino group-containing organopolysiloxane, an emulsion starting solution is prepared as in Example 1. To 100 parts of this emulsion are added 20 parts of solution (a) used for comparison in Example 1 and this is then diluted 4-fold with water. This is then applied to a bladder's surface as in Example 1 and heated. The organopolysiloxane on the bladder's surface is then a rubber and forms a highly lubricating film. This bladder can be used to mold 16 tires and the releasability is good.

Example 3

Sodium hydroxide, 100 ppm, as the catalyst is added to 495 parts hydroxyl-terminated dimethylpolysiloxane with viscosity of $9\times10^{-5}$ $m^2/s$ (90 cS) and 5 parts of the hydrolysis condensation product (viscosity $5.3\times10^{-4}$ $m^2/s$ (530 cS)) of the silane with the formula

$$CH_3(CH_3O)_2Si(CH_2)_3NHCH_2CH_2NH_2.$$

An equilibration reaction is carried out at 90°C for 10 hours followed by neutralization with 150 ppm acetic acid to provide a hydroxyl group-terminated organopolysiloxane (viscosity, $3.75\times10^{-3}$ $m^2/s$ (3,750 cS)) which contains amino groups.

To 30 parts of this organopolysiloxane are added 5 parts polyoxyethylene nonylphenol ether surfactant, 1 part cationic surfactant with the formula

$$(CH_3)_3(C_{12}H_{25})N^+Cl^-$$

and 64 parts water. This is then emulsified using a colloid mill emulsifier to provide a homogeneous emulsion starting solution.

The emulsion is then diluted 4-fold with water and applied to a bladder's surface as in Example 1 and heated. The organopolysiloxane on the bladder's surface becomes rubbery, forming a highly lubricating film. This bladder could be used to mold 11 tires and the releasability was good.

Example 4

Using a colloid mill emulsifier, a homogeneous emulsion starting solution is prepared by adding 1 part nonionic surfactant with the formula

$$C_{12}H_{25}O(C_2H_4O)_6H,$$

2 parts nonionic surfactant with the formula

$$C_{12}H_{25}O(C_2H_4O)_8H,$$

0.5 part cationic surfactant with the formula

$$(CH_3)_3(C_{12}H_{25})N^+Cl^-$$

and 81.5 parts water to the 15 parts of the amino group-containing organopolysiloxane (viscosity $1.65\times10^{-3}$ $m^2/s$) (1650 cS)) with the formula

$$H_2NCH_2CH_2CH_2(Me_2SiO)_{400}(MeSiO)_6SiMe_2CH_2CH_2CH_2NH_2$$

$$|$$

$$CH_2CH_2CH_2NHCH_2CH_2NH_2$$

This emulsion is then diluted 2-fold with water, applied to a bladder's surface as in Example 1 and heated. The organopolysiloxane on the bladder's surface becomes rubbery and firmly adhered to the bladder's surface. The bladder could be used to mold 14 tires and the releasability was good.

As described above, this invention comprises a lubricant composition for tire-molding bladders which does not suffer from the drawbacks to the prior art. When a bladder treated with this composition is used in molding crude tires, the bladder life is significantly extended. At the same time, the tire can be molded with no stains on the surface and fewer quality problems such as exposure of tire cord or bead twist, etc. This lubricant composition for tire-molding bladders can be applied to the tires for all types of vehicles such as bicycles, motorcycles, tractors, airplanes, passenger cars, light trucks, trucks, buses, trailers, forklifts, power shovel cars, etc. It is useful regardless of the type of tire, bias or radial, etc.

**Claims**

1. In a process for molding a tire, said process comprising applying a lubricant/release composition to at least the tire-contacting surface of a tire-molding bladder to improve the lubrication between the bladder and a tire being molded therewith and/or to improve the release of the bladder from a tire molded therewith, the improvement comprising (i) applying, as said lubricant/release composition, a lubricant/ release composition consisting essentially of an aqueous emulsion of an organopolysiloxane component containing an average of at least one silicon-bonded, amino-substituted hydrocarbon radical per molecule thereof having the formula

$$—R^1(NHCH_2CH_2)_aNHR^2$$

wherein $R^1$ denotes a divalent hydrocarbon radical, $R^2$ denotes a radical selected from hydrogen and monovalent hydrocabron radicals and *a* denotes a number having a value of from 0 to 10 and, optionally, at least one surfactant selected from nonionic and cationic surfactants; and (ii) thereafter curing the applied composition.

2. A process according to Claim 1, wherein each amino-substituted hydrocarbon radical of the organopolysiloxane component has the formula

$$C_nH_{2n}NHCH_2CH_2NH_2$$

wherein *n* denotes a number having a value of 3 or 4.

3. A process according to Claim 2, wherein the organopolysiloxane component has a viscosity of from $10^{-5}$ to $10^{-2}$ $m^2/s$ (10 to 10,000 centistokes) at 25°C.

4. A process according to Claim 3, wherein at least 20 percent of the silicon-bonded organic radicals of the organopolysiloxane component are alkyl radicals.

5. A process according to Claim 4, wherein the organopolysiloxane component has the formula

$$AMe_2SiO(\underset{\substack{|\\ C_nH_{2n}NHCH_2CH_2NH_2}}{MeSiO})_x(Me_2SiO)_ySiMe_2A$$

wherein A denotes a terminal radical selected from hydroxyl, monovalent hydrocarbon, alkoxy and

$$—C_nH_{2n}(NHCH_2CH_2)_aNH_2,$$

and *x* and *y* each denote, independently a number having a value of zero or more and the lubrication/ release composition further comprises one or more surfactants selected from nonionic surfactants and cationic surfactants.

6. A process according to Claim 5, wherein the lubricant/release composition, applied ot the tire-molding bladder, is cured by heating at 130°C to 200°C for about 30 to 10 minutes, respectively.

**Patentansprüche**

1. Verfahren zum Ausformen eines Reifens durch Aufbringen einer Gleitmittel/ Trennmittelzusammensetzung auf mindestens die den Reifen berührende Oberfläche eines Reifenformheizbalges, um die Gleitwirkung zwischen dem Heizbalg und einem damit auszuformenden Reifen zu verbessern und/oder um die Trennung des Heizbalges von einem damit ausgeformten Reifen zu verbessern, gekennzeichnet durch (i) Aufbringen als die Gleitmittel/Trennmittelzusammensetzung eine Gleitmittel/Trennmittelzusammensetzung bestehend im wesentlichen aus einer wässrigen Emulsion einer Organopolysiloxanverbindung, die im Mittel mindestens eine an Silicium gebundene, aminosubstituierte Kohlenwasserstoffgruppe pro Molekül desselben enthält, die die Formel

$$—R^1(NHCH_2CH_2)_aNHR^2$$

hat, in der $R^1$ eine zweiwertige Kohlenwasserstoffgruppe ist, $R^2$ ein aus Wasserstoff und einweritigen Kohlenwasserstoffgruppen ausgewählter Rest ist und *a* eine Zahl mit einem Wert von 0 bis 10 ist und ggf. mindestens einem oberflächenaktiven Mittel, das aus nichtionischen oder kationischen oberflächenaktiven Mitteln ausgewählt ist und (ii) anschließendes Härten der aufgebrachten Zusammensetzung.

2. Verfahren nach Anspruch 1, dadurch gekennzeichnet, daß jede aminosubstituierte Kohlenwasserstoffgruppe der Organopolysiloxanverbindung die Formel aufweist

$$C_nH_{2n}NHCH_2CH_2NH_2,$$

in der *n* eine Zahl mit einem Wert von 3 oder 4 ist.

3. Verfahren nach Anspruch 2, dadurch gekennzeichnet, daß die Organopolysiloxanverbindung bei 25°C eine Viskosität von $10^{-5}$ bis $10^{-2}$ $m^2$/Sek. (10 bis 10.000 Centistokes) aufweist.

4. Verfahren nach Anspruch 3, dadurch gekennzeichnet, daß mindestens 20% der an Silicium gebundenen organischen Gruppe der Organopolysiloxanverbindung Alkylgruppen sind.

5. Verfahren nach Anspruch 4, dadurch gekennzeichnet, daß die Organopolysiloxanverbindung die Formel aufweist

$$AMe_2SiO(\underset{\underset{C_nH_{2n}NHCH_2CH_2NH_2}{|}}{MeSiO})_x(Me_2SiO)_ySiMe_2A$$

in der A eine endständige Gruppe ist, ausgewählt aus Hydroxyl, einwertigem Kohlenwasserstoff, Alkoxy und

$$-C_nH_{2n}(NHCH_2CH_2)_aNH_2$$

und *x* und *y* jeweils unabhängig eine Zahl mit einem Wert von 0 oder mehr sind und die Gleitmittel/Trennmittelzusammensetzung zusätzlich ein oder mehrere oberflächenaktive Mittel enthält, ausgewählt aus nichtionischen oberflächenaktiven Mittel und kationischen, oberflächenaktiven Mitteln.

6. Verfahren nach Anspruch 5, dadurch gekennzeichnet, daß die auf den Reifenformheizbalg aufgebrachte Gleitmittel/Trennmittelzusammensetzung gehärtet wird durch Erwärmen auf 130°C bis 200°C für 30 bis 10 Minuten.

**Revendications**

1. Dans un procédé de moulage d'un pneumatique, ledit procédé comprenant l'application d'une composition lubrifiante/antiadhésive au moins à la surface en contact avec le pneumatique d'une vessie de moulage de pneumatiques afin d'améliorer la lubrification entre la vessie et un pneumatique en cours de moulage avec celle-ci et/ou d'améliorer la séparation de la vessie et d'un pneumatique moulé avec celle-ci, le perfectionnement comprenant (i) l'application, en tant que composition lubrifiante/antiadhésive précitée, d'une composition lubrifiante/antiadhésive consistant essentiellement en une émulsion aqueuse d'un constituant organopolysiloxane contenant une moyenne d'au moins un radical hydrocarboné amino-substitué lié au silicium par molécule et répondant à la formule

$$-R^1(NHCH_2CH_2)_aNHR^2,$$

dans laquelle $R^1$ désigne un radical hydrocarboné divalent, $R^2$ désigne un radical choisi parmi l'hydrogène et les radicaux hydrocarbonés monovalents et *a* désigne un nombre ayant une valeur de 0 à 10, et, falcultativement, au moins un agent tensioactif choisi parmi les agents tensioactifs non ioniques et cationiques; puis (ii) le durcissement de la composition appliquée.

2. Un procédé selon la revendication 1, dans lequel chaque radical hydrocarboné amino-substitué du constituant organopolysiloxane répond à la formule

$$C_nH_{2n}NHCH_2CH_2NH_2,$$

dans laquelle *n* désigne un nombre ayant une valeur de 3 ou 4.

3. Un procédé selon la revendication 2, dans lequel le constituant organopolysiloxane présente une viscosité de $10^{-5}$ à $10^{-2}$ $m^2$/s (10 à 10 000 centistokes) à 25°C.

4. Un procédé selon la revendication 3, dans lequel au moins 20 pour cent des radicaux organiques liés au silicium de constituant organopolysiloxane sont des radicaux alkyles.

5. Un procédé selon la revendication 4, dans lequel le constituant organopolysiloxane répond à la formule

$$AMe_2SiO(\underset{\underset{C_nH_{2n}NHCH_2CH_2NH_2}{|}}{MeSiO})_x(Me_2SiO)_ySiMe_2A$$

dans laquelle A désigne un radical terminal choisi parmi les radicaux hydroxyle, hydrocarbonés monovalents, alcoxy et

$$-C_nH_{2n}(NHCH_2CH_2)_aNH_2,$$

et *x* et *y* désignent chacun indépendamment un nombre ayant une valeur de zéro ou plus, et la composition lubrifiante/antiadhésive comprend en outre un ou plusieurs agents tensioactifs choisis parmi les agents tensioactifs non ioniques et les agents tensioactifs cationiques.

6. Un procédé selon la revendiation 5, dans lequel la composition lubrifiante/antiadhésive, appliquée à la vessie de moulage de pneumatiques, est durcie par chauffage à 130 à 200°C pendant environ 30 à 10 minutes, respectivement.